# EUROPEAN PATENT SPECIFICATION

(11) **EP 0 425 312 B1**
(45) Date of publication and mention of the grant of the patent: **12.06.1996**
(21) Application number: 90311777.8
(22) Date of filing: 26.10.1990
(51) Int. Cl.: G11B 19/20

(54) **Spindle motor assembly for a disk drive**
In-Wellen-Motorbau für Plattenantrieb
Assemblage moteur dans l'axe d'un entraînement de disque

(30) Priority: 27.10.1989 US 424673
(43) Date of publication of application: 02.05.1991
(73) Proprietor: SEAGATE TECHNOLOGY INTERNATIONAL, Georgetown Grand Cayman Island (KY)
(72) Inventor: Macleod, Donald James, Aptos, California 95003 (US)
(74) Representative: Sturt, Clifford Mark

(56) References cited:
- EP-A- 0 220 447
- WO-A-84/01863
- WO-A-88/07285
- DE-A- 3 542 542
- US-A- 4 633 110
- US-A- 4 686 592
- US-A- 4 775 906
- US-A- 4 827 168
- PATENT ABSTRACTS OF JAPAN vol. 10, no. 356 (E-459)(2412) 29 November 1986, & JP-A- 61 154460
- PATENT ABSTRACTS OF JAPAN vol. 10, no. 22 (P-424)(2079) 28 January 1986, & JP-A- 60 173770

## Description

### SPINDLE MOTOR ASSEMBLY FOR A DISK DRIVE

The present invention relates to a spindle motor assembly for use in a disk drive, and to a disk drive including a spindle motor assembly.

Disk drives for modern desk top computer systems record and re-produce information on a recording medium. The medium generally takes the form of a stack of circular information storage disks having a multiplicity of concentric tracks. Conventional Winchester type disk drives include a disk stack having one or more vertically aligned information storage disks which are journaled about the hub portion of a single spindle assembly. Each disk has at least one associated magnetic head that is adapted to transfer information between the disk and an external system. The heads are typically arranged to move back and forth radially across the disks and a spindle motor assembly is provided to rotate the disks. The movements of the spindle and the magnetic heads co-operate to allow random access to any portion of each disk.

Although disk drives are a relatively old and established technology, consumer demands continuously push for more compact, higher capacity, faster accessing designs. One of the size limiting components in traditional designs has been the spindle motor assembly used to rotate the information storage disks.

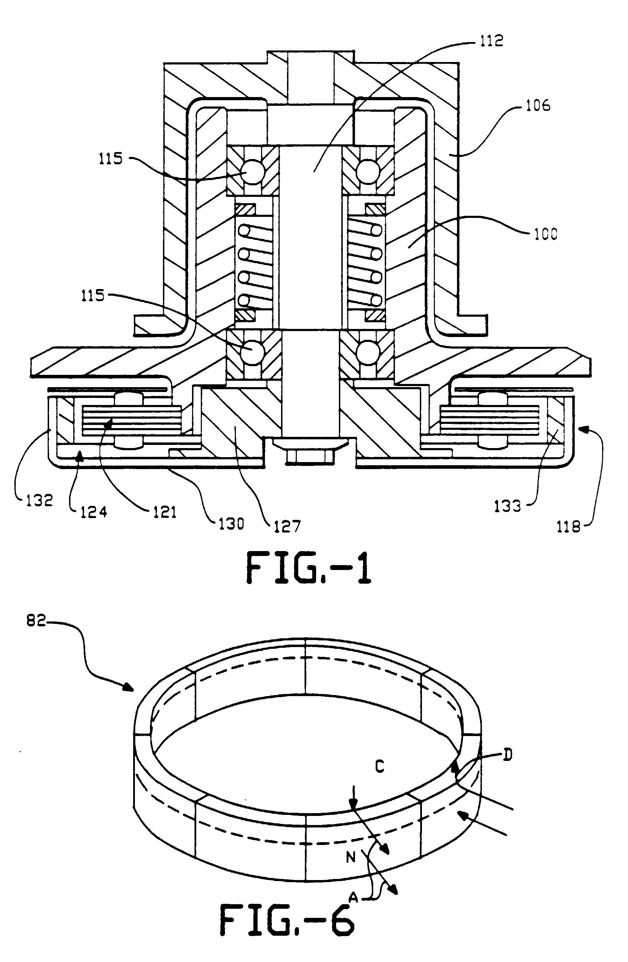

A conventional spindle motor assembly used in disk drive applications is shown in Figure 1. As seen therein, traditional spindle motor assemblies typically include a non-rotating spindle flange 100 that is securely fastenable to the drive housing. A rotatable spindle hub 106 is journaled about the spindle flange 100, and is carried by an elongated rotatable shaft 112 that extends co-axially with the hub and flange. A pair of spaced apart ball bearings 115 are coupled between the shaft and the flange to allow the spindle shaft 112 to rotate freely within the confines of the spindle flange 100. A motor 118 is disposed directly underneath the spindle arrangement such that the motor components are located outside of the disk housing when the drive is assembled. The motor 118 includes a stator assembly 121 and a rotor assembly 124. The stator assembly includes a plurality of lamination stacks each having a winding wrapped there-about. The rotor assembly 124 is attached to the spindle shaft by a lower hub 127, and includes a cup shaped rotor cap 130 having a raised annular flange portion 132 with a plurality of magnets 133 disposed about the interior surface of the flange portion. Such an arrangement does not readily lend itself to miniaturisation when used in conventional disk drives, since it has numerous components having large air spaces therebetween. Further, mere reduction in component size tends to weaken the component structure, which tends to lead to faster wear and to lower the mechanical resonance frequencies of the motor. Such mechanical resonances generate acoustic noises which are irritating to users and therefore are preferably minimised.

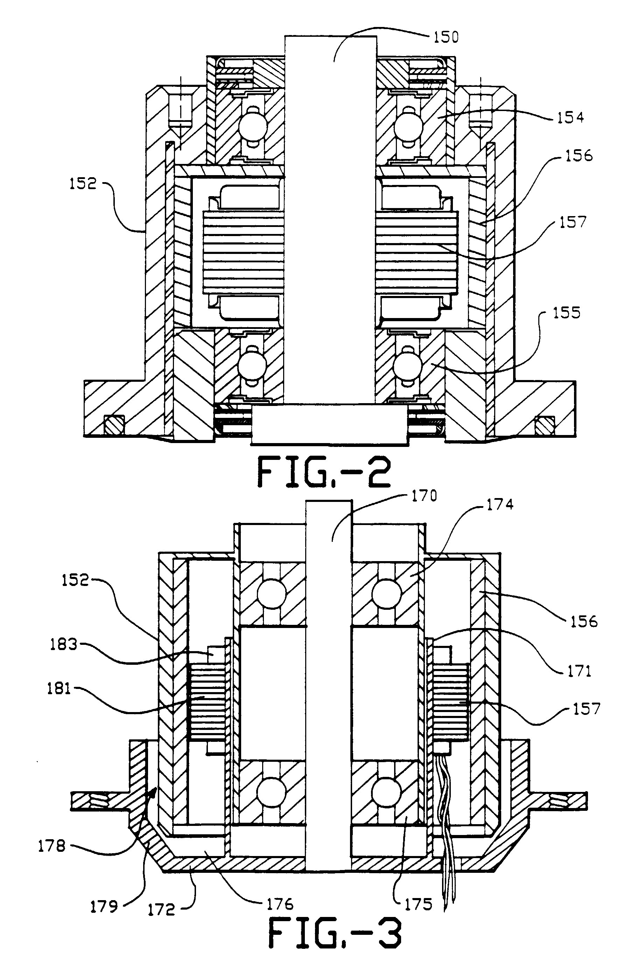

One spindle motor design that has better space utilisation than the traditional design incorporates an in-hub motor, as shown in Figure 2. In this approach, a fixed shaft 150 is provided about which a spindle hub 152 is journaled. A pair of spaced apart ball bearings 154, 155 are mounted directly between the fixed shaft and the rotatable hub 152. The rotor magnets 156 are carried directly by the spindle hub 152, and the stator windings 157 are disposed between the spaced apart ball bearings 154 and 155. Although such a design is more compact than the traditional design described above, it suffers a drawback in that the bearings 154, 155 and the windings 157 compete for space within the hub region. This is not a particular problem in high profile disk drives, since there is ample room to provide sufficiently sized bearings and stator windings. However, in low profile disk drives, either the size (and strength) of the bearings or the size (and power) of the stator windings must suffer. Such a sacrifice is unacceptable for high quality, high performance disk drives.

Yet another recent approach is shown in Figure 3. In this approach, a fixed shaft 170 is again used and the spindle hub 152 has a cup shaped radial cross section. The bearings 174, 175 are placed between the shaft 170 and an inner wall of the spindle hub 152. A motor housing base 172, which is also cup shaped, has a large U-shaped trough 176 outside the inner wall of the spindle hub 172, and motor components are positioned within the enlarged trough 176. Specifically, the rotor magnets 156 are supported on an inner surface of an outer wall of the spindle hub, while the stator windings 181 are carried by a support ring 183 on a wall 171 extending upward from the motor housing base within the U-shaped trough. While such an arrangement allows adequately sized bearings and stator windings, it requires a disk with a large inner diameter, since the hub must be quite large.

US-A-4 285 016 discloses a disk drive motor assembly having the features recited in the pre-characterising portion of present claim 1. However, the axis about which the stator windings are wound is perpendicular to the shaft axis. As a consequence of this, the orientation of the magnets is such that the moment of inertia of the spindle hub is large, and therefore this reduces the efficiency of the disk drive.

In view of the drawbacks of the prior art designs, there is a need for a compact spindle motor design that is capable of providing the performance required by state of the art disk drives.

Accordingly, it is an object of the present invention to provide a compact spindle motor assembly that is suitable for use in a low profile disk drive.

In accordance with the present invention, there is provided spindle motor assembly for a disk drive, comprising a fixed shaft; a drive housing with a base; a spindle hub journaled co-axially for rotation about the fixed shaft, the spindle hub having a spindle flange with an enlarged thickness flange portion for supporting at least one disk; a pair of bearings for rotatably coupling the spindle hub to the fixed shaft, each of said bearings having an inner race secured to the fixed shaft and an outer race secured to an inner surface of the spindle hub; magnet means carried by an outer surface of the spindle hub and located adjacent at least one of the pair of bearings, the magnet means mounted below said at least one disk and having a plurality of poles and forming a rotor portion of the spindle motor; and stator means mounted below said at least one disk and having a plurality of fixed windings for co-operating with the magnet means to rotate the spindle hub with respect to the shaft; characterised in that said stator means is arranged so that the axis about which its windings are wound is substantially parallel to the shaft axis and the magnet means is arranged for co-operating therewith; an extended portion of said spindle flange extends beyond said enlarged thickness flange portion and down towards the base of said disk drive, and a ring portion of said base extends up from said base towards said flange, said ring and said extended flange overlapping to form a seal to isolate the spindle motor from the disk drive housing; said magnet means are inside an area defined by an outer wall portion of the spindle which passes through and locates the bore of said at least one disk in use and said stator means are partially within said area; and said bearings are spaced apart.

As described below, the invention may provide a spindle motor assembly that utilises a fixed shaft and places the motor components on the outside wall of the spindle hub directly below a flange for supporting at least one disk. The disclosed spindle motor assembly includes the fixed shaft having the spindle hub journaled co-axially thereabout. The spindle hub has several distinct portions including an enlarged thickness flange portion, which supports the drive's disk stack, and a reduced thickness rotor carrying portion located adjacent the side of the flange opposite the disk stack. A pair of spaced apart bearings rotatably couple the spindle hub to the fixed shaft, with each of the bearings having its inner race secured to the fixed shaft and its outer race secured to the inner surface of the spindle hub. The rotor assembly includes a magnet arrangement having a number of poles, and is carried by the outer surface of the rotor carrying portion of the spindle hub. The stator has a plurality of fixed windings that co-operate with the rotor to rotate the spindle hub (and thus the disk stack). The stator assembly is preferably substantially positioned within the space defined by the hub's flange portion and rotor carrying portion.

In the preferred embodiment, Hall effect sensors are set in a fixed place adjacent the rotor magnet arrangement to detect the passage of the poles to control commutation. To improve the sensitivity of the Hall effect sensors, the magnet is magnetised to establish two non-parallel flux regions for each pole.

A high torque spindle motor assembly may thus be provided, which is rugged, easy to manufacture, and has a small parts count.

The present invention is described further, by way of example, with reference to the accompanying drawings, in which:-
Figure 1 is a diagrammatic cross sectional view of a traditional spindle motor assembly;
Figure 2 is a diagrammatic cross sectional view of a prior art fixed spindle motor assembly;
Figure 3 is diagrammatic cross sectional view of a second prior art fixed spindle motor assembly;
Figure 4 is a cross sectional view of a spindle motor assembly in accordance with the present invention;
Figure 5 is a cross sectional view of an alternative embodiment of the present invention that incorporates Hall effect sensors to control commutation;
Figure 6 is diagrammatic perspective view of the magnet shown in Figure 5 high lighting the flux orientations of the various poles; and
Figure 7 is a diagrammatic top view of a disk drive, with its top cover removed, that is suitable for incorporating therein the spindle motor assembly of the present invention.

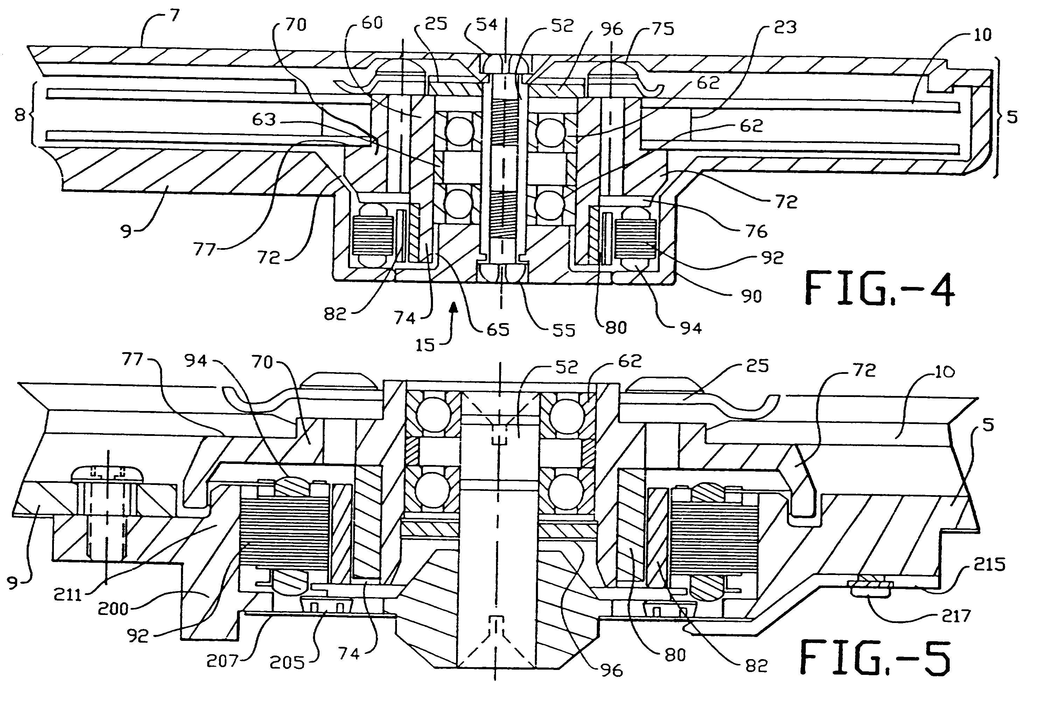

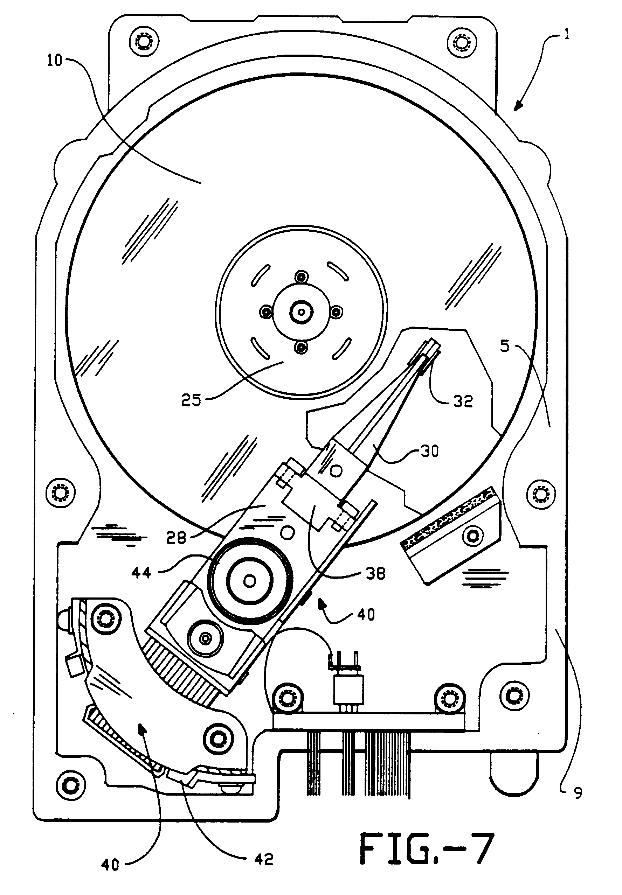

Referring initially to Figures 4 and 7, a rotary disk drive 1 suitable for incorporating therein the present invention is shown in schematic and plan views. A disk stack 10 is journaled about a spindle motor assembly 15 within a housing 5 having upper and lower casing members 7 and 9, respectively. The disk stack 10 includes a plurality of information storage disks 10 with a spacer 23 disposed between adjacent disks 10 to maintain their spacing. In the embodiment shown in Figure 4, only two information storage disks are used. However, it should be appreciated that any member of information storage disks may be incorporated into the disk stack with spacers between each pair of adjacent disks. A disk clamp 25 positioned above the top information storage disk firmly secures the disk stack to the hub portion of the spindle motor assembly 15.

A head positioner assembly 28 is rotatably mounted between the upper and lower casings 7, 9 in one corner of the housing 5. The head positioner assembly 28 carries a plurality of head arm flexures 30 that each carry a magnetic read/write or servo head 32 for reading information from and writing information onto the magnetic disks 10. The head arms are each attached to the head positioner assembly 28 by individual flexure mounts 38. A voice coil motor 40 is adapted precisely to rotate the head positioner assembly back and forth such that the data and servo heads move across the magnetic disks. A magnetic latch 42 holds the head positioner assembly in place when the disk drive is not in use.

Each magnetic disk 10 has a multiplicity of concentric circular information storage tracks for recording information. The rotative action of the spindle motor assembly 15, when combined with the generally radial movements of heads 32 controlled by the head positioner assembly 28, allows random access to information stored on the disks 10.

Referring next primarily to Figure 4, the first embodiment of the spindle motor 15 chosen for the purpose of illustration includes a fixed spindle shaft 52 that is secured to the drive housing 5 by a pair of opposing screws 54 and 55. It should be appreciated that an alternative spindle shaft mounting would work as well. By way of example, one end of the shaft could be press fit into a recess in either the upper or lower casing. A rotatable spindle hub 60 is co-axially journaled about the spindle shaft 52 and is supported by a pair of spaced apart ball bearings 62. The inner and outer races of the ball bearings 62 are fixedly attached, preferably adhesively bonded, to the spindle shaft and the inner surface of the spindle hub 60, respectively, and allow the spindle hub 60 to rotate freely about the spindle shaft 52. The ball bearings 62 are separated by a spacer 63 which is used axially to pre-load the bearings during fabrication.

The spindle hub 60 has substantially cylindrical walls, which define an inner bore 65 that receives the spindle shaft 52 and the ball bearings 62. The wall is divided into three separate sections, and has an annular post ring 67 for supporting the disk clamp 25. Specifically, the wall includes a thick upper section 70, an enlarged middle flange section 72, and a relatively thin magnet supporting lower section 74. A multiplicity of screw holes extend downward from the top portion of the hub through the upper and middle flange sections of the wall to receive the clamp screws 75 to secure the disk clamp 25 to the spindle motor 15. A small cover plate 76 is journaled about the hub below the flange 72 to seal the screw holes to prevent dust particles and metal flakes within the motor assembly from escaping into the main disk chamber. The flange 72 provides a support surface 77 upon which the information storage disks 10 can rest. Thus, the disk stack is held in place between the disk clamp 25 and the support surface 77 of the flange 72.

An iron magnet support ring 80 is fixedly attached, preferably adhesively bonded, to the lower hub section 74. In the described embodiment, the spindle hub 60 is formed of aluminium. A ring magnet 82 is fixedly attached to the magnet support ring 80 to firmly secure the magnet to the spindle hub. Since the magnet 82 is carried by the spindle hub 60, it will rotate with the spindle hub and therefore forms the rotor portion of the spindle motor assembly.

In the embodiment of the spindle motor shown in Figure 4, the disk stack 8 contains only two information storage disks, and the housing 5 is designed to minimise the drive's profile and the space consumed. Accordingly, the lower casing member 9 includes a cylindrical well recess 90 adapted to receive the stator and rotor portions of the spindle motor 15. A multiplicity of stator windings 92 are wound about ferric lamination stacks 94, which in turn are adhesively bonded to the inner walls of the well recess 90.

A conventional ferro-fluidic seal 96 incorporating a fluid magnetic shield is positioned within the inner bore 65 of the spindle hub 60 to provide a seal against contamination by air flow from the bearing area to the head disk area.

Referring next to Figure 5, an alternative embodiment of the invention will be described using like numbers to denote like parts. In this embodiment, a Hall effect sensor arrangement is provided that monitors the rotations of the rotor to control commutation. Figure 5 also shows slightly different embodiments of several other components of the spindle motor as well to exemplify a few of the modifications contemplated within the scope of the invention. In this second embodiment, a single information storage disk 10 is contemplated, and thus the upper section 70 of the spindle hub is greatly reduced. Further, a base plate 200 is provided which is coupled to part of the disk housing 5 by a plurality of screws, and which allows the stator and Hall effect sensor arrangement to be installed as a separate unit.

Hall effect sensors 205 are mounted on a printed circuit board 207 that is carried by the base plate 200 and are positioned immediately below the ring magnet 82. Thus, every time a pole passes a sensor, the sensor detects the change of flux and so informs a controller (not shown) which is used to control commutation of the motor. Several Hall effect sensors may be situated about the base plate to detect incremental movements. By way of example, in the embodiment chosen for the purposes of illustration, three Hall effect sensors are used which are disposed at 120° angles with respect to one another.

As will be appreciated by those skilled in the art, the ring magnet 82 would typically be magnetised to provide the strongest field perpendicular to its outer surface (as suggested by flux lines A and B in Figure 6). Although Hall effect sensors mounted as described would typically be able to detect enough of a flux change to note the passage of a pole, the magnetic rings may be magnetised such that each pole emits a field having two different orientations as seen in Figure 6. Specifically, the lowest portion of the magnet immediately adjacent the Hall effect sensors is magnetised such that its flux lines C and D are parallel to the magnet's outer surface as shown in Figure 6, while the vast majority of the ring magnet 82 is magnetised in the traditional manner.

Returning to Figure 5, the spindle flange in the described embodiment turns down to overlap a protruding ring 211 that extends upwardly from the base. The overlap serves better to isolate the spindle assembly to reduce the transfer of dust particles and metallic flakes between the air space about the spindle motor components and the air space within the main drive compartments. A printed circuit cable 215 extends from the printed circuit board 207 to the controller. The printed circuit cable is clamped to the base plate 200 by clamp 217.

As will be appreciated by those skilled in the art, the actual number of poles in the rotor's ring magnet 82 and the number of windings in the stator may be widely varied depending upon the requirements of the motor. By way of example, in the described embodiments, the ring magnet includes eight poles and the stator includes twelve windings 92.

It should also be apparent that the described spindle motor structure has several advantages over conventional designs. Initially, the described structure is inherently very stiff which tends to reduce the drive's susceptibility to the excitation of structural mechanical resonances which, in turn, often produce undesirable acoustic noise. The design has a low profile, which saves space in the continuing quest to reduce the required overall drive size. It can also provide a high torque to a compact, light weight hub assembly, which allows rapid information access. Finally, the resultant design has a lower parts count than traditional spindle motors, which simplifies manufacturing and reduces the overall spindle motor cost.

Variations and/or modifications are possible (or may be envisaged) within the scope of the appended claims.

## Claims

1. A spindle motor assembly for a disk drive, comprising a fixed shaft (52); a drive housing with a base (200); a spindle hub (60) journaled co-axially for rotation about the fixed shaft, the spindle hub (60) having a spindle flange with an enlarged thickness flange portion (72) for supporting at least one disk; a pair of bearings (62) for rotatably coupling the spindle hub to the fixed shaft, each of said bearings having an inner race secured to the fixed shaft and an outer race secured to an inner surface of the spindle hub; magnet means (82) carried by an outer surface of the spindle hub and located adjacent at least one of the pair of bearings, the magnet means mounted below said at least one disk and having a plurality of poles and forming a rotor portion of the spindle motor; and stator means (92,94) mounted below said at least one disk and having a plurality of fixed windings for co-operating with the magnet means to rotate the spindle hub with respect to the shaft; characterised in that said stator means (92,94) is arranged so that the axis about which its windings are wound is substantially parallel to the shaft axis and the magnet means (82) is arranged for co-operating therewith; an extended portion (74) of said spindle flange extends beyond said enlarged thickness flange portion (72) and down towards the base (200) of said disk drive, and a ring portion (211) of said base (200) extends up from said base towards said flange, said ring and said extended flange overlapping to form a seal to isolate the spindle motor from the disk drive housing; said magnet means are inside an area defined by an outer wall portion of the spindle which passes through and locates the bore of said at least one disk in use and said stator means are partially within said area; and said bearings (62) are spaced apart.

2. A spindle motor assembly according to claim 1 characterised by a Hall effect sensor (205) fixedly positioned adjacent the magnet means to detect passage of the poles to control commutation.

3. A spindle motor assembly according to claim 1 or 2 characterised in that the magnet means comprises an annular ring which is magnetised to have the plurality of poles, and in that each pole is magnetised to generate fields having two separate orientations.

4. A spindle motor assembly according to any of claims 1 to 3 characterised in that the stator means is located near and supported from a base end of the fixed shaft outside the bearings.

5. A spindle motor assembly according to any preceding claim wherein said magnet means (82) are carried on a reduced thickness rotor-carrying portion (74) of the spindle hub (60).

6. A disk drive including a spindle motor assembly according to any preceding claim characterised in that the disk drive has a housing (5) comprising an upper casing (7) and a lower casing (9), the lower casing forming a well (90), into which the magnet means and the stator means are recessed.

7. A disk drive according to claim 6 characterised in that the lower casing carries the stator means.

8. A disk drive according to claim 7 characterised in that the spindle motor assembly includes a base plate (200), which is secured to the fixed shaft and which carries the stator means, the base plate being secured to form part of the lower casing.

9. A disk drive according to any preceding claim characterised in that said ring portion (211) surrounds said stator means (92,94) and said flange portion (72) of the spindle hub has a supporting surface for said at least one disk, said supporting surface extending over said stator means.

10. A disk drive according to any preceding claim characterised in that the lower casing includes a cylindrical well (90) in which the stator coils and the lower portion of the spindle hub are received.

11. A disk drive according to any preceding claim characterised in that the stator coils are confined within the well and do not extend above downwardly extending walls of the well, the portion of the spindle hub supporting the at least one disk extending over the stator coils to be closely adjacent the lower casing of the disk drive housing and to define a confined region for the stator coils and the magnet means.

12. A disk drive according to any preceding claim characterised in that bearing means (62) located between the fixed shaft and the spindle hub are located near upper and lower ends of the fixed shaft, with the magnet means being located nearly adjacent the lower bearing means.

13. A disk drive according to any preceding claim characterised in that the portion of the spindle hub supporting the at least one disk includes screw holes for receiving screws (75) holding a disk fastener (25) atop the at least one disk, and in that a shield (76) is provided at the bottom of the screw holes facing the stator coils and the magnet means to prevent the entry of particles into the spindle motor assembly through the screw holes.

## Patentansprüche

1. Spindelmotorbaugruppe für ein Plattenlaufwerk, mit einer festen Welle (52); mit einem Plattenlaufwerk-Gehäuse mit einem Basisteil (200); mit einer Spindelnabe (60), die koaxial für eine Drehung um die feste Welle gelagert ist, wobei die Spindelnabe (60) einen Spindelflansch mit einem eine vergrößerte Dicke aufweisenden Flanschabschnitt (72) zur Halterung von zumindest einer Platte aufweist; mit zwei Lagern (62) zur drehbaren Verbindung der Spindelnabe mit der festen Welle, wobei jedes der Lager einen an der festen Welle befestigten Lagerinnenring und einen an einer Innenoberfläche der Spindelnabe befestigten Lageraußenring aufweist; mit einer Magneteinrichtung (82), die von einer äußeren Oberfläche der Spindelnabe gehaltert ist und benachbart zu zumindestens einem der beiden Lager liegt, wobei die Magneteinrichtung unterhalb der zumindest einen Platte befestigt ist, eine Vielzahl von Polen aufweist und einen Rotorabschnitt des Spindelmotors bildet, und mit einer Statoreinrichtung (92, 94), die unterhalb der zumindestens einen Platte befestigt ist und eine Vielzahl von festen Wicklungen aufweist, um mit der Magneteinrichtung zusammenzuwirken, um die Spindelnabe gegenüber der Welle in Drehung zu versetzen,
dadurch gekennzeichnet, daß die Statoreinrichtung derart angeordnet ist, daß die Achse, um die die Wicklungen gewickelt sind, im wesentlichen parallel zur Wellenachse verläuft, und daß die Magneteinrichtung (82) für ein Zusammenwirken hiermit ausgebildet ist, daß ein vorspringender Teil (74) des Spindelflansches sich über den eine vergrößerte Dicke aufweisenden Flanschabschnitt (72) hinaus und nach unten in Richtung auf den Basisteil (200) des Plattenlaufwerks erstreckt, daß sich ein Ringabschnitt (211) des Basisteils von diesem Basisteil aus in Richtung auf den Flansch nach oben erstreckt, wobei der Ring und der vorspringende Flansch einander überlappen, um eine Dichtung zu bilden, um den Spindelmtor von dem Gehäuse des Plattenlaufwerkes zu trennen, daß sich die Magneteinrichtung im Inneren eines Bereiches befindet, der durch einen äußeren Wandabschnitt der Spindel umgrenzt ist, die durch die Bohrung der zumindest einen Platte bei deren Verwendung hindurchläuft und diese festlegt, wobei die Statoreinrichtung sich teilweise in diesem Bereich befindet, und daß die Lager (62) mit Abstand voneinander angeordnet sind.

2. Spindelmotorbaugruppe nach Anspruch 1,
gekennzeichnet durch einen Halleffekt-Sensor (205), der fest benachbart zu der Magneteinrichtung angeordnet ist, um das Vorbeilaufen der Pole zu erfassen, um die Kommutation zu steuern.

3. Spindelmotorbaugruppe nach Anspruch 1 oder 2,
dadurch gekennzeichnet, daß die Magneteinrichtung einen kreisförmigen Ring umfaßt, der derart magnetisiert ist, daß er eine Vielzahl von Polen aufweist, und daß jeder Pol so magnetisiert ist, daß er Felder erzeugt, die zwei getrennte Ausrichtungen aufweisen.

4. Spindelmotorbaugruppe nach einem der Ansprüche 1 bis 3,
dadurch gekennzeichnet, daß die Statoreinrichtung in der Nähe eines Basisendes der festen Welle außerhalb der Lager angeordnet und von dieser gehaltert ist.

5. Spindelmotorbaugruppe nach einem der vorhergehenden Ansprüche, bei der die Magneteinrichtung (82) auf einem eine verringerte Dicke aufweisenden, den Rotor tragenden Teil (74) der Spindelnabe (60) gehaltert ist.

6. Plattenlaufwerk, das eine Spindelmotorbaugruppe gemäß einem der vorhergehenden Ansprüche einschließt,
dadurch gekennzeichnet, daß das Plattenlaufwerk ein Gehäuse (5) mit einem oberen Gehäuseteil (7) und einem unteren Gehäuseteil (9) aufweist, und daß der untere Gehäuseteil eine vertiefte Wanne (90) bildet, in der die Magneteinrichtung und die Statoreinrichtung versenkt angeordnet sind.

7. Plattenlaufwerk nach Anspruch 6,
dadurch gekennzeichnet, daß der untere Gehäuseteil die Statoreinrichtung haltert.

8. Plattenlaufwerk nach Anspruch 7,
dadurch gekennzeichnet, daß die Spindelmotorbaugruppe eine Grundplatte (200) einschließt, die an der festen Welle befestigt ist und die Statoreinrichtung haltert, wobei die Grundplatte so befestigt ist, daß sie einen Teil des unteren Gehäuseteils bildet.

9. Plattenlaufwerk nach einem der vorhergehenden Ansprüche,
dadurch gekennzeichnet, daß der Ringabschnitt (211) die Statoreinrichtung (92, 94) umgibt, und daß der Flanschabschnitt (72) der Spindelnabe eine Anlagefläche für die zumindestens eine Platte aufweist, wobei sich die Anlageoberfläche über die Statoreinrichtung erstreckt.

10. Plattenlaufwerk nach einem der vorhergehenden Ansprüche,
dadurch gekennzeichnet, daß der untere Gehäuseteil eine zylindrische vertiefte Wanne (90) einschließt, von der die Statorwicklungen und der untere Abschnitt der Spindelnabe aufgenommen werden.

11. Plattenlaufwerk nach einem der vorhergehenden Ansprüche,
dadurch gekennzeichnet, daß die Statorwicklungen in der vertieften Wanne umgrenzt sind und sich nicht über nach unten erstreckende Wände der Wanne hinaus erstrecken, daß der Abschnitt der Spindelnabe, der die zumindestens eine Platte haltert, sich über die Statorwicklungen hinaus erstreckt, um eng benachbart zum unteren Gehäuseteil des Plattenlaufwerk-Gehäuses zu liegen und um einen umgrenzten Bereich für die Statorwicklungen und die Magneteinrichtung zu bilden.

12. Plattenlaufwerk nach einem der vorhergehenden Ansprüche,
dadurch gekennzeichnet, daß Lagereinrichtungen (62), die zwischen der festen Welle und der Spindelnabe liegen, sich in der Nähe der oberen und unteren Enden der festen Welle befinden, wobei die Magneteinrichtung nahe benachbart zu den unteren Lagereinrichtungen angeordnet ist.

13. Plattenlaufwerk nach einem der vorhergehenden Ansprüche, dadurch gekennzeichnet, daß der Teil der Spindelnabe, der die zumindestens eine Platte haltert, Schraubenlöcher zur Aufnahme von Schrauben (75) einschließt, die ein Plattenbefestigungsteil (25) oberhalb der zumindestens einen Platte halten, und daß eine Abschirmung (76) an der auf die Statorwicklungen und die Magneteinrichtung gerichteten Unterseite der Schraubenlöcher vorgesehen ist, um den Eintritt von Teilchen in die Spindelmotorbaugruppe durch die Schraubenlöcher hindurch zu verhindern.

## Revendications

1. Assemblage de moteur de l'axe d'un entraînement de disque, comprenant un arbre fixe (52) ; un boîtier d'entraînement avec un socle (200) ; un moyeu d'axe (60) tourillonné coaxialement autour de l'arbre fixe, le moyeu d'axe (60) ayant une bride d'axe avec une partie (72) de bride de plus grande épaisseur pour supporter au moins un disque une paire de paliers (62) pour accoupler en rotation le moyeu d'axe et l'arbre fixe, chacun desdits paliers ayant une piste intérieure fixée sur l'arbre fixe et une piste extérieure fixée sur la surface intérieure du oyeu d'axe; un moyen d'aimant (82) supporté par une surface extérieure du moyeu d'axe et placé adjacent à au moins un des deux paliers, le moyen d'aimant monté sous ledit disque au moins comprenant une pluralité de pôles et constituant une partie de rotor du moteur de l'axe ; et un moyen de stator (92, 94) monté sous ledit disque au moins et comprenant une pluralité d'enroulements fixes pour coopérer avec le moyen d'aimant et faire tourner le moyeu d'axe par rapport à l'arbre ; caractérisé en ce que ledit moyen de stator (92, 94) est agencé de manière que l'axe autour duquel ses enroulements sont bobinés soit sensiblement parallèle à l'axe de l'arbre et en ce que le moyen d'aimant (82) est disposé pour coopérer avec lui ; une partie prolongée (74) de ladite bride d'axe s'étend au-delà de ladite partie de bride de plus grande épaisseur (72) et descend vers le socle (200) dudit entraînement de disque, et une partie annulaire (211) dudit socle (200) part dudit socle vers le haut en direction de ladite bride, ladite bague et ladite bride prolongée empiétant pour former un joint qui isole le moteur de l'axe du boîtier d'entraînement de disque ; le moyen d'aimant étant placé à l'intérieur d'une surface définie par une partie de paroi extérieure de l'axe qui traverse et définit l'orifice dudit disque au moins en service et ledit moyen de stator se trouve partiellement à l'intérieur de ladite surface ; et en ce que lesdits paliers (62) sont espacés l'un de l'autre.

2. Assemblage de moteur d'axe selon la revendication 1, caractérisé par un capteur à effet Hall (205) rigidement fixé adjacent au moyen d'aimant pour détecter le passage des pôles et commander la commutation.

3. Assemblage de moteur d'axe selon l'une des revendications 1 ou 2, caractérisé en ce que le moyen d'aimant comprend une bague annulaire qui est aimantée et comporte une pluralité de pôles, et en ce que chaque pôle est aimanté pour créer des champs ayant deux orientations distinctes.

4. Assemblage de moteur d'axe selon l'une quelconque des revendications 1 à 3, caractérisé en ce que le moyen de stator est placé près de et supporté par une extrémité de base de l'arbre fixe à l'extérieur des paliers.

5. Assemblage de moteur d'axe selon l'une quelconque des revendications précédentes dans lequel ledit moyen d'aimant (82) est supporté sur une partie portante du rotor (74) d'épaisseur réduite du moyeu d'axe (60).

6. Entraînement de disque comprenant un assemblage de moteur d'axe selon l'une quelconque des revendications précédentes, caractérisé en ce que l'entraînement de disque comprend un boîtier (5) comportant une partie supérieure (7) et une partie inférieure (9), la partie inférieure constituant une cavité (90) à l'intérieur de laquelle sont logés en retrait le moyen d'aimant et le moyen de stator.

7. Entraînement de disque selon la revendication 6, caractérisé en ce que la partie inférieure du boîtier supporte le moyen de stator.

8. Entraînement de disque selon la revendication 7, caractérisé en ce que l'assemblage de moteur d'axe comprend une plaque de socle (200) qui est fixée à l'arbre fixe et qui supporte le moyen de stator, la plaque de socle étant fixée de manière à constituer une partie du boîtier inférieur.

9. Entraînement de disque selon l'une quelconque des revendications précédentes, caractérisé en ce que la partie de bague (211) entoure ledit moyen de stator (92, 94) et en ce que ladite partie de bride (72) du moyeu d'axe comporte une surface destinée à supporter ledit disque au moins, ladite surface support s'étendant par- dessus ledit moyen de stator.

10. Entraînement de disque selon l'une quelconque des revendications précédentes, caractérisé en ce que la partie inférieure du boîtier comprend une cavité cylindrique (90) dans laquelle sont reçus les enroulements du stator et la partie inférieure du moyeu d'axe.

11. Entraînement de disque selon l'une quelconque des revendications précédentes, caractérisé en ce que les enroulements du stator sont confinés à l'intérieur de la cavité et ne dépassent pas au-dessus des parois de la cavité s'étendant vers le bas, la partie du moyeu d'axe supportant le disque au moins s'étendant par-dessus les enroulements du stator pour venir en position étroitement adjacente avec la partie inférieure du boîtier de l'entraînement de disque et pour définir une région confinée destinée à recevoir les enroulements de stator et les moyens d'aimant.

12. Entraînement de disque selon l'une quelconque des revendications précédentes, caractérisé en ce que les moyens de paliers (62) situés entre l'arbre fixe et le moyeu d'axe sont logés à proximité des extrémités supérieure et inférieure de l'arbre fixe, les moyens d'aimant étant placés à proximité et adjacents au moyen de palier inférieur.

13. Entraînement de disque selon l'une quelconque des revendications précédentes, caractérisé en ce que la partie du moyeu d'axe supportant le disque au moins comprend des orifices à vis pour recevoir des vis (75) maintenant une fixation de disque (25) par-dessus le disque au moins, et en ce qu'un écran (76) est placé au fond des trous de vis face aux enroulements du stator et du moyen d'aimant pour éviter à des particules de pénétrer dans l'assemblage de moteur d'axe par les trous de vis.
